# EUROPEAN PATENT SPECIFICATION

(11) **EP 0 725 354 B1**
(45) Date of publication and mention of the grant of the patent: **21.07.1999**
(21) Application number: 95101311.9
(22) Date of filing: 31.01.1995
(51) Int. Cl.: G06F 19/00

(54) **A game machine having play-by-play announcement**
Spielmaschine mit spielsituationsabhängigen Ansagen
Machine de jeux ayant des annonces jeu par jeu

(43) Date of publication of application: 07.08.1996
(73) Proprietor: Konami Co., Ltd., Kobe-shi, Hyogo-ken (JP)
(72) Inventor: Murata, Shiro, Kobe-shi, Hyogo-ken (JP); Toyohara, Koji, Kobe-shi, Hyogo-ken (JP); Nishikawa, Naoki, Kobe-shi, Hyogo-ken (JP); Ikariko, Masahiro, Kadoma-shi, Osaka-fu (JP); Uehara, Kazuhiro, Kobe-shi, Hyogo-ken (JP); Inoue, Hideto, Akashi-shi, Hyogo-ken (JP)
(74) Representative: Müller-Boré & Partner Patentanwälte

(56) References cited:
- WO-A-86/02753
- GB-A- 2 163 929
- US-A- 5 067 079
- J. M. PRESTON 'Compact Disc-Interactive; A Designer's Overview' 1987 , KLUWER TECHNICAL BOOKS , DEVENTER, THE NETHERLANDS * page 22 - page 25 * * page 41 - page 42 * * page 80 - page 81 * * page 88 - page 89 * * page 119 - page 121 * * page 139 * * page 193 * * page 195 *

## Description

### BACKGROUND OF THE INVENTION

This invention relates to a game machine provided with a number of operating members for giving an operational command to a character displayed on a monitor and a controller for receiving the operational command to control the development of game in accordance with a given game program.

In conventional television game machines, there has been known a technology of generating the sound of footsteps, i.e. sound effects in connection with the movement of a character displayed on a monitor. Japanese Unexamined Utility Model Publication No. SHO 55-56686 and Japanese Unexamined Utility Model Publication No. SHO 65-72994 respectively disclose a baseball game machine and a golf game machine accompanied with play-by-play announcement sound.

More specifically, such a game machine is associated with a sound record sheet which is inserted into a loading section of the game machine to generate prepared sound for play-by-play announcement in accordance with the development of game, thereby providing a realistic impression.

The conventional sound effects, typically represented by the above-mentioned footsteps associated with the movement of character, is chiefly characterized in that a sounding time is short because of its simple sound nature, processing is based on easy repetition of the same sound, and the sound effects are applied to particular operations only. Thus, such conventional sound effects will encounter with a difficulty of creating consecutive sounds constituting a meaningful sentence. Since such delicate sound effects require too much data, development of game will be generally obstructed by processing such sound effect if executed based on the conventional technology.

It has been also impossible to accept a complicated judgment in accordance with the development of game which is mandatorily required In the play-by-play announcement. For example, according to the conventional baseball game machine or golf game machine, development of game is solely determined by reproduction of announcement optionally selected from the sound record sheet. In other words, it has been impossible to execute a sophisticated play-by-play announcement in response to each scene of the game. i.e., each operation of the game.

J.M. Preston 'compact Disc-Interactive; A Designer's Overview' 1987, Kluwer Technical Bookds, Deventer, The Netherlands describes a Compact Disc-Interactive (CD-I) system by way of example of an interactive golf game. Audio signals particularly in the form of soundmaps may be played at real-time using for example an audio processor.

GB-A-2 163 929 relates to an electronic game apparatus with a game form setting means, a background image setting means, a character setting means, a game story setting means and a game performing means which allows a player to create and perform a desired game without complex programming.

It is the object of the invention to provide a game machine which can execute play-by-play announcement without hindering or interruption of the game development to provide a realistic atmosphere.

This object is fulfilled by a game machine having the features disclosed in claim 1. Preferred embodiments are defined in the dependent subclaims.

The inventive transfer of vocal sound data advantageously eliminates the problem that the development of the game, i.e. the game program, is undesirably interrupted for a significant long time for transferring vocal sound data at a time.

Accordingly, a game machine comprises: a monitor on which a game scene is displayed; a manipulator operable to generate an instructive signal in accordance with an operation of a player; a storage portion operable to store data for each of a plurality of vocal sound groups, each vocal sound group expressing a word in connection with the game; a controller operable to produce a new game scene on the monitor in accordance with a game program installed therein and an instructive signal generated by the manipulator, and designate data for a vocal sound group suitable to the produced new scene; and a sound generator operable to generate vocal sounds suitable for the new scene based on the designated data.

The data is divided into a plurality of data parts, and the plurality of data parts are transfered one after another at a predetermined interval to the converter. Also, it may be appreciated to assign each data part with a specified address to render the controller designate data by use of an address. Further, the storage portion may be provided with a data region storing data parts in accordance with their respective addresses and a reference region storing the head address of each vocal sound group data and the number of data parts to render the controller designate data by specifying the head address and the number of data parts.

The sound generator may be constructed by a converter operable to convert the designated data to vocal sounds at a rate which holds the frequency of the vocal sound data within an audible band; and a data transfer operable to transfer the designated data to the converter at a rate faster than the rate of conversion in the converter.

It may be preferable that the transfer of a data part is executed by temporarily interrupting the production of a new scene. Further, the controller may be provided with a timer operable to provide an interrupting time.

With the above-mentioned game machine, there is provided the storage portion operable to store data of a plurality of vocal sound groups and the controller operable to produce a new game scene on the monitor in accordance with a game program and an instructive signal generated by the manipulator. Further, the controller is operable to designate data of a vocal sound group suitable to the produced new scene which vocal sounds suitable for the new scene is in turn generated based on. This makes it possible to generate vocal sounds suitable for game developments, which consequently providing an improved realistic atmosphere.

The data transfer is executed from the storage portion to the converter faster than the rate at which the designated data is converted to vocal sound. Accordingly, vocal sounds are generated without the likelihood of giving the player an awkward delay.

The data is divided into a plurality of data parts, and the plurality of data parts are transferred one after another at a predetermined interval to the converter. This makes it possible to reduce time of each data transfer according to needs. Accordingly, the data transfer will give little influence to the processing of the controller to produce game scenes.

Each data part is assigned with a specified address. The storage portion mainly consists of the data region and the reference region. Accordingly, the designation of a suitable vocal sound group will be executed with ease.

The transfer of a data part is executed by temporarily interrupting the production of a new scene. The controller may be provided with a timer operable to provide an interrupting time. Accordingly, vocal sounds relative to a new scene will be generated simultaneously with the production of the new scene.

The above and other objects, features and advantages of the present invention will become more apparent from the following detailed description which is to be read in conjunction with the accompanying drawings.

### BRIEF DESCRIPTION OF THE DRAWINGS

Fig. 1 is a block diagram showing an arrangement of a control system of a game machine having a play-by-play announcement function in accordance with the present invention;
Fig. 2 is a diagram showing details of a vocal sound data storage portion and its peripheral devices of the control system;
Fig. 3 is a flowchart showing an operation of designating vocal sound groups under a batting scene of a baseball game executed In the game machine; and
Fig. 4 is a flowchart showing an operation of transferring vocal sound data partially while interrupting processing for game development.

### DETAILED DESCRIPTION OF THE PREFERRED EMBODIMENT OF THE INVENTION

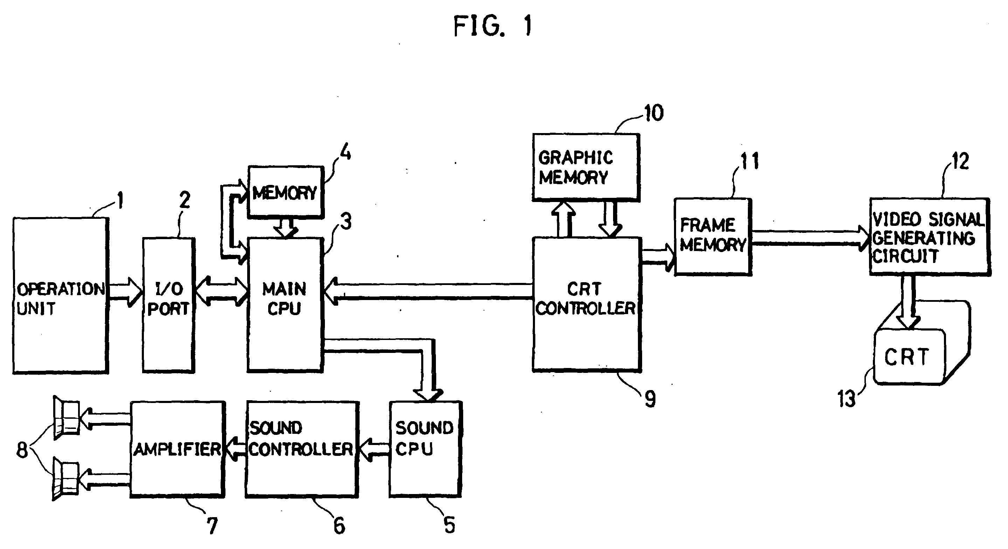

A preferred embodiment of the present invention will be described In detail with reference to the accompanying drawings. Fig. 1 is a block diagram showing a principal arrangement of a game machine of the present invention.

A reference numeral 1 represents an operation unit including a manipulating lever, switches, and buttons. Operative contents of the operation unit 1 is sent via an I/O port 2 to a main CPU 3. The manipulating lever of the operation unit 1 gives a command relating to a moving direction of the character. The switches and buttons enable the character to cause a predetermined motion, such as a pitching motion, a throwing motion, and a bat swing in a baseball game, at a predetermined timing. Furthermore, this kind of game machine has a team creating function of allowing a game player to flexibly select his/her favorite team and baseball players using the operation unit 1.

The main CPU 3 executes an overall control of the operations of the game machine, and has a ROM 31 for storing a game program and a RAM 32 for temporarily storing processing data. The ROM 31 can be omitted if the game program is stored in a game cassette detachably inserted in a cassette loading section of the game machine.

A vocal sound data storage portion 4 stores various data of groups of vocal sounds required for play-by-play announcement in association with development of game and an instructive signal generated by the operation unit 1, which will be described in detail later. For example, a baseball game contains a total of four scenes, i.e., a batting scene, a fielding scene, a changing-over scene and a game set scene. A predetermined number of vocal sound groups are assigned to each of four scenes for play-by-play announcement in accordance with the development of game and manipulation of the operation unit 1.

In the batting scene, for example, there are the following groups of vocal sounds: "BREAKING BALL", "STRAIGHT BALL", "CHANGE-UP", "STRIKE", "BALL", "WITHOUT RUNNERS", "WITH A RUNNER AT FIRST BASE", "BATTER OUT", "OUT AT FIRST BASE", "CHANGE-OVER", "TEAM NAME, "BATTING ORDER", "FIELDING POSITION", "PLAYER'S NAME", "UNIFORM NUMBER", etc. Using these vocal sound groups, a play-by-play announcement, for example, goes like "BREAKING BALL, STRIKE", "FIRST BATTER, CENTER, SMITH, NUMBER 5", "STRIKE, BATTER OUT, THREE MEN OUT", or the like, as described later.

In the fielding scene, for example, there are the following groups of vocal sounds: "HIT!", "HIT A BALL", "CATCH A BALL", "THROW A BALL TO FIRST BASE", "RETURN THE BALL TO HOME BASE", "THIS IS BIG", "HIT A FENCE DIRECTLY", "HOME RUN", "SINGLE", "DOUBLE", "TWO-RUN HOME RUN", "PASSED", "NICE PLAY!", "SCORING A FIRST POINT", "FOUL BALL", etc. Using these vocal sound groups, announcement, for example, goes like "HIT!, THIS IS BIG, HOME RUN, SCORING A FIRST POINT", "CATCH A BALL, NICE PLAY, RETURN THE BALL TO HOME BASE, RUNNER OUT" or the like.

In the changing-over scene, for example, there are such vocal sound groups as: "INNING", "BOTTOM", "TOP", "ENDING", "TEAM NAME", "END SCORELESS", "GO INTO REVERSE", etc.

In the game set scene, for example, there are such vocal sound groups as: "AS YOU SEE, TODAY'S GAME ENDED", "WITH A VICTORY OF", "TEAM NAME", etc.

The reason why a plurality of groups of vocal sounds having the same meaning, such as "HIT!" and "HIT A BALL", are prepared for the same scene is to express a delicate nuance of each vocal sounds by taking account of circumstances. For example, the former vocal sound group "HIT!" is exclusively used for a scene that there Is a possibility of getting a score or turning the tide in the game while the latter vocal sound group "HIT A BALL" is solely used for other circumstances. Simllarly, it may be preferable to prepare a plurality of groups of vocal sounds having the same word but different intonations, and select a proper vocal sound group according to a circumference.

The main CPU 3 successively designates an appropriate vocal sound group to be used in the play-by-play announcement in accordance with the development of game and a operational command given from the operation unit 1. The designated vocal sound group, after being applied the pulse code modulation (PCM) and a predetermined data compression processing, is transferred to a later-described sound CPU 5.

The sound CPU 5 temporarily stores vocal sound group data for play-by-play announcement which has been transferred from the main CPU 3. The vocal sound data, after being applied a demodulation and an expansion processing, are read out at a predetermined rate which holds the frequency of the vocal sound data within an audible band. A sound controller 6 converts vocal sound data into an analog sound waveform signal which is output from a number of loud speakers 8 through an amplifier 7.

A CRT controller 9 accesses a graphic memory 10 to supply a frame memory 11 with necessary image signals and characters in response to control signals supplied from the main CPU 3. The frame memory 11 stores the image signals and characters read out from the graphic memory 10. A video signal generating circuit 12 converts the image signals and others stored in the frame memory 11 into video signals, and periodically supplies these video signals to a monitor 13 at a high speed.

The monitor 13, such as CRT or LCD, provides a scene image on a screen thereof in accordance with the received video signals.

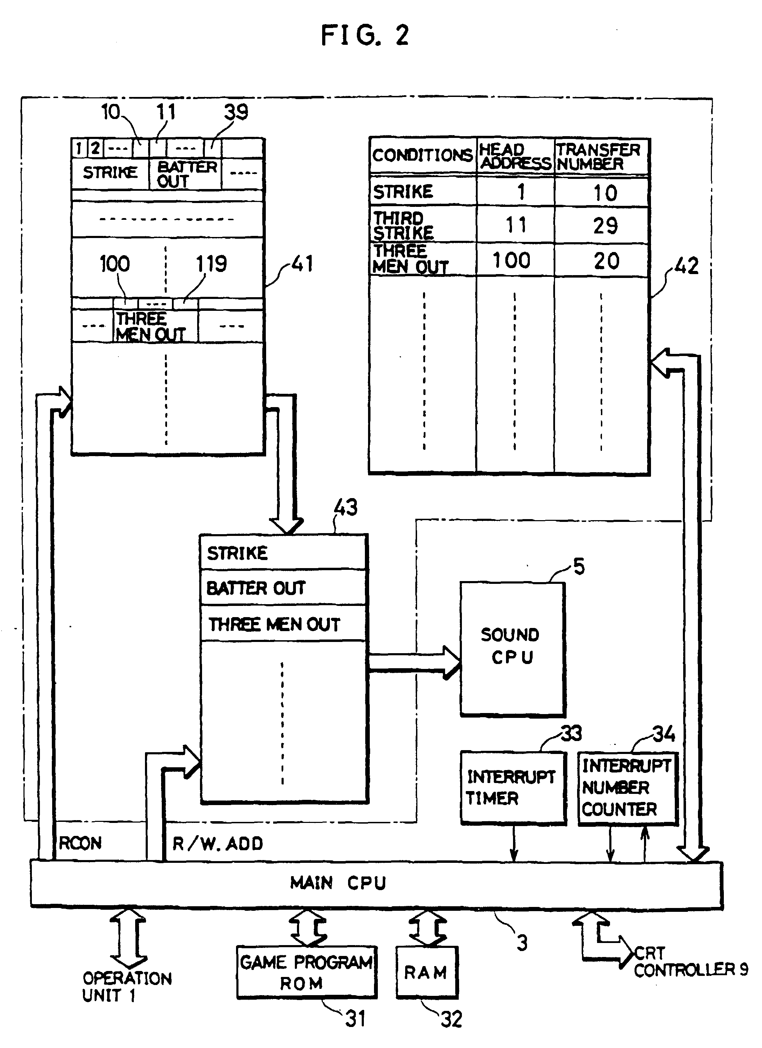

Fig. 2 is a diagram showing details of the vocal sound data storage portion 4 and its peripheral devices. The vocal sound data storage portion 4 includes three storage regions: a vocal sound data region 41, a reference region 42 and an arranging region 43.

The vocal sound data region 41 includes a ROM having a predetermined storage capacity, and stores data of groups of vocal sounds for play-by-play announcement. The vocal sound data is a series of digital signals representing a voice waveform. Each vocal sound group data is divided into a specified number of data parts. Each data part is assigned with a specified address. For example, addresses 1-10 are assigned to the vocal sound group "STRIKE", addresses 11-39 are assigned to the vocal sound group "BATTER OUT", and addresses 100-119 are assigned to the vocal sound group "THREE MEN OUT".

The reference region 42 includes a ROM having a predetermined storage capacity, and stores the head address and the number of data parts of each vocal sound group data. Each vocal sound group data are partially sent each data part to the sound CPU 5. Accordingly, the number of data parts is identical to the number of partial data transfers for each vocal sound group. For example, the vocal sound group "STRIKE" is divided into ten data parts. Accordingly, the vocal sound group "STRIKE" is completely transferred in ten partial data transfers. However, it should be noted that the number of partial data transfers is not required to be equal to the number of data parts, but each vocal sound group data may be transferred smaller times than the number of data parts. In this embodiment, the data amount which is to be transferred in one partial data transfer is 80H (substantially equivalent to 128 bytes).

Vocal sound groups are determined in accordance with the development of game and an instructive signal generated by manipulation of the operation unit 1. For example, in the case of a pitched ball being a strike, the main CPU 3 designates the vocal sound group "STRIKE" whose head address is 1 and partial transfer number is 10. Further, if this "STRIKE" is a third strike, the main CPU 3 also designates the vocal sound group "BATTER OUT" whose head address is 11 and partial transfer number is 29. Furthermore, if three men are out in this instance, the CPU 3 also designates the vocal sound group "THREE MEN OUT" whose head address is 100 and partial transfer number is 20.

The arranging region 43 includes an RAM, and stores data of the designated vocal sound groups, i.e., "STRIKE", "BATTER OUT", and "THREE MEN OUT", in the order of designations of the main CPU 3. The main CPU 3 partially transfers these vocal sound group data to the sound CPU 5 in the order of designation.

A resettable interrupting timer 33 sets an interrupting time to partially transfer vocal sound data, for example, at an interval of 1/60 second. More specifically, the main CPU 3 assigns, for example, 10% of each 1/60 second to the partial transfer of vocal sound data and assigns the remaining 90% of 1/60 second to the game processing.

This partial transfer of vocal sound data is advantageous in eliminating the problem that the development of game, i.e., game program, is undesirably interrupted for a significant long time for transferring vocal sound data at a time. Accordingly, the game scene quickly responds to manipulation of the operation unit 1. An interrupting number counter 34 is adapted for counting the number of interruptions or partial transfers.

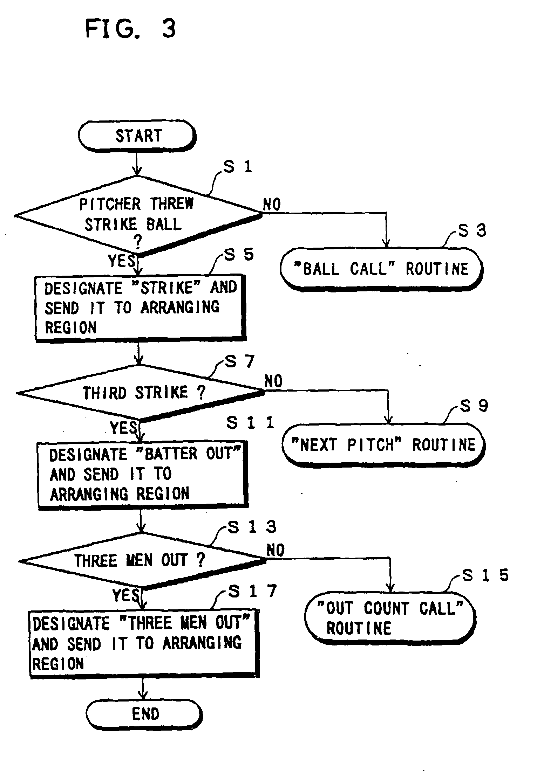

Fig. 3 is a flowchart showing an operation of designating of vocal sound groups under a batting scene in a baseball game wherein a ball pitched by a pitcher is about to be judged.

First of all, it is judged whether or not the pitcher has thrown a strike ball (Step S1). If the judgment is "NO" (i.e. the pitcher has not thrown a strike ball) in Step S1, the CPU 3 proceeds to Step S3 in which a "BALL CALL" routine is executed. On the contrary, if the judgment is "YES" in Step S1, the CPU 3 proceeds to Step S5 in which the vocal sound group "STRIKE" is designated by specifying the head address and the number of partial transfers (1, 10) of the reference region 42, and the "STRIKE" vocal sound data is sent from the vocal sound data region 41 to the arranging region 43.

Next, in the event that the pitched ball is strike, it is further judged in Step S7 whether or not this is a third strike. If the judgment is "NO" in Step S7, the CPU 3 proceeds to Step S9 in which a "NEXT PITCH" routine is executed. On the contrary, if the judgment is "YES" in Step S7, the CPU 3 proceeds to Step S11 in which the vocal sound group "BATTER OUT" is designated by specifying the head address of the partial transfer number (11, 29) of the reference region 42, and the "BATTER OUT" vocal sound data is sent from the vocal sound data region 41 to the arranging region 43.

Subsequently, in the event that a batter is out, it is judged in Step S13 whether or not three men are out. If the judgment is "NO" in Step S13, the CPU 3 proceeds to Step S15 in which a "OUT COUNT CALL" routine is executed. In the "OUT COUNT CALL", "ONE MAN OUT" or "TWO MEN OUT" vocal sound data is sent from the vocal sound data region 41 to the arranging region 43. On the contrary, if the judgment is "YES", i.e., three men are judged to be out, in Step S13, the CPU 3 proceeds to Step S17 in which the vocal sound group "THREE MEN OUT" is designated by specifying the head address of the partial transfer number (100, 200) of the reference region 42, and the "THREE MEN OUT" vocal sound data is sent from the vocal sound data region 41 to the arranging region 43.

It is to be noted that upon start of the game routine, the interrupting timer 33 starts and the interrupting number counter 34 is reset to "1".

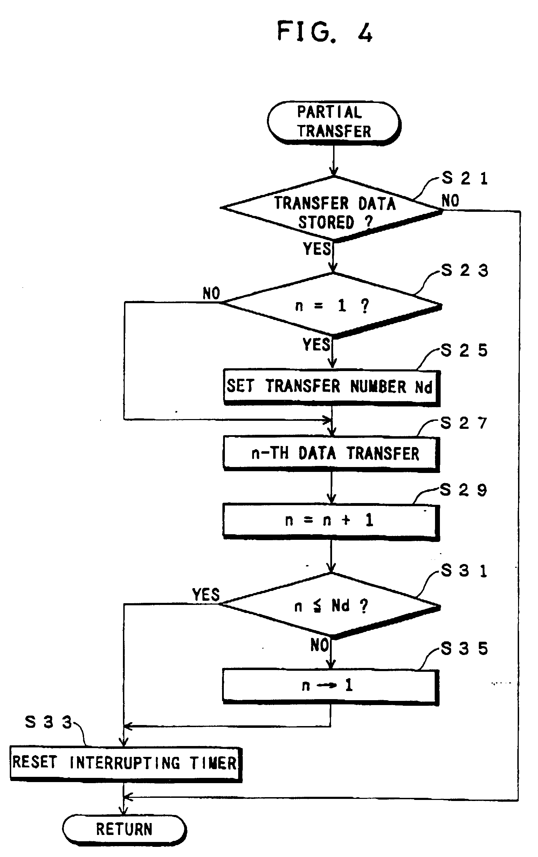

Fig. 4 is a flowchart showing an operation of transferring a partial data of a designated vocal sound group to the sound CPU 5. The CPU 3 enters this partial transferring operation in response to an elapse of 1/60 second measured by the interrupting timer 33.

In this routine, first of all, it is judged in Step S21 whether or not the arranging region 43 stores vocal sound data for transfer. If the judgment is "YES" in Step S21, it is further judged in Step S23 whether or not the present transfer is an initial partial data transfer for a given vocal sound group, i.e., the partial data transfer number is first (n=1).

If the judgment is "YES" (n=1) in Step S23, the CPU 3 proceeds to Step S25 in which partial data transfer number (Nd) necessary for the given vocal sound group is set based on the data stored in the reference region 42. Subsequently, the CPU 3 proceeds to Step S27. On the contrary, if the judgment is "NO" in Step S23, the CPU 3 skips Step S25 and directly proceeds to Step S25 because the present transfer is in the process of transferring data for the given vocal sound group.

In Step S27, the n-th partial data is transferred from the arranging region 43 to the sound CPU 5. After finishing the n-th partial data transfer, the partial data transfer number "n", i.e., the count number of the interrupting number counter 34, is incremented by 1 in Step S29.

Next, it is judged in Step S31 whether or not the incremented transfer number "n" is smaller than or equals to the set transfer number Nd. If the judgment is "YES" in Step S31, i.e., the present transfer is in the process of transferring partial data for the given vocal sound, the CPU 3 proceeds to Step S33 to reset the interrupting timer 33 and then return to a main routine.

On the contrary, if the judgment is "NO" in Step S31, i.e., the present transfer completes the transfer of data for the given vocal sound group, the CPU 3 proceeds to Step S35 to reset the present partial data transfer number "n" to "1" and then proceeds to Step S33.

If the judgment is "NO" in Step S21, i.e., no transfer data is stored in the arranging region 43, the CPU 3 ends this partial data transfer routine.

The loud speakers 8 generate a vocal sound in accordance with a sound signal from the sound CPU 5 for a period which is longer than the period of transferring a partial data. Therefore, utilizing this difference between the sound generation period and the partial data transfer period, it is possible to transfer a next partial data before the loud speakers 8 terminate the generation of sound based on the previous partial data. Accordingly, even if a number of vocal sound groups are successively supplied, these vocal sounds can be surely generated by the loud speakers 8 without giving the game player any awkward delay.

In this embodiment, one partial data is transferred every 1/60 second. However, it is not necessary to set a fixed transfer period. As far as the partial data transfer is executed sufficiently fast compared with the sound generation period of the loud speakers 8, the partial data transfer period may be changed depending on the processing content of the main CPU 3. For example, when the main CPU 3 is not required to assign a long period for processing of game development, it may be possible to transfer a mass of an appropriate number of partial data or all the partial data for a given sound group.

## Claims

1. A game machine comprising:
a monitor (13) on which a game scene is displayed;
a manipulator (1) operable to generate an instructive signal in accordance with an operation of a player;
a storage portion (4) operable to store data for each of a plurality of vocal sound groups, each vocal sound group expressing a word in connection with the game;
a controller (3) operable to produce a new game scene on the monitor in accordance with a game program installed therein and an instructive signal generated by the manipulator, and designate data for a vocal sound group suitable to the produced new scene;
a sound generator (5,6,7) operable to generate vocal sounds suitable for the new scene based on the designated data, wherein the designated data is divided into a plurality of data parts, the sound generator further comprising
a converter (6) operable to convert the designated data to vocal sounds, and
a data transfer means (5) operable to transfer the plurality of data parts to the converter one after another during respective portions of predetermined time-intervals until all data of the designated data are transferred to the converter.

2. A game machine as defined in claim 1, wherein
the converter is operable to convert the designated data to vocal sounds at a rate which holds the frequency of the data within an audible band; and
the data transfer means is operable to transfer the designated data to the converter at a rate faster than the rate of conversion in the converter.

3. A game machine as defined in claim 2, wherein each data part is assigned with a specified address, and the controller designates data by use of an address.

4. A game machine as defined in claim 3, wherein the storage portion includes:
a data region storing the data parts in accordance with their respective addresses;
a reference region storing the head address of each vocal sound group data and the number of data parts; and
the controller designates data by specifying the head address and the number of data parts.

5. A game machine as defined in claim 2, wherein the transfer of a data part is executed by temporarily interrupting the production of a new scene.

6. A game machine as defined in claim 5, wherein the controller includes a timer operable to provide an interrupting time.

## Patentansprüche

1. Spielmaschine mit
einem Monitor (13), auf welchem eine Spielszene dargestellt ist;
einem Manipulator (1), welcher betreibbar ist, um ein Anweisungs- bzw. Befehlssignal in Übereinstimmung mit einer Operation eines Spielers zu generieren;
einem Speicherabschnitt (4), welcher betreibbar ist, um Daten für jede einer Vielzahl von vokalen Tongruppen zu speichern, wobei jede vokale Tongruppe ein Wort in Verbindung mit dem Spiel ausdrückt;
einem Steuergerät (3), welches betreibbar ist, um eine neue Spielszene auf dem Monitor in Übereinstimmung mit einem in dieser installierten Spielprogramm und einem Anweisungs- bzw. Befehlssignal, welches durch den Manipulator generiert wird, herzustellen und Daten für eine vokale Tongruppe auszuwählen, welche für die hergestellte neue Szene geeignet sind;
einem Schall- bzw. Tongenerator (5, 6, 7), welcher betreibbar ist, um vokale Töne, die für die neue Szene geeignet sind, basierend auf den ausgewählten Daten zu erzeugen, wobei die ausgewählten Daten in eine Vielzahl von Datenteilen geteilt sind,
und der Tongenerator einen Konvertierer (6), welcher betreibbar ist, um die ausgewählten Daten zu vokalen Tönen zu konvertieren, und ein Datenübertragungsmittel (5) umfaßt, welches betreibbar ist, um die Vielzahl von Datenteilen zu dem Konvertierer hintereinander während jeweiligen Abschnitten von vorbestimmten Zeitintervallen transferiert, bis alle Daten der ausgewählten Daten zu dem Konvertierer transferiert sind.

2. Spielmaschine nach Anspruch 1, wobei der Konvertierer betreibbar ist, um die ausgewählten Daten zu vokalen Tönen mit einer Geschwindigkeit bzw. Rate zu konvertieren, welche die Frequenz der Daten innerhalb eines hörbaren Bandes bzw. Bereiches hält; und
wobei das Datentransfermittel betreibbar ist, um die ausgewählten Daten zu dem Konvertierer mit einer Geschwindigkeit bzw. Rate zu transferieren, welche schneller als die Geschwindigkeit bzw. Rate einer Konversion in dem Konvertierer ist.

3. Spielmaschine nach Anspruch 2, wobei jedem Datenteil eine bestimmte Adresse zugewiesen wird und das Steuergerät Daten unter Verwendung einer Adresse bestimmt bzw. auswählt.

4. Spielmaschine nach Anspruch 3, wobei der Speicherabschnitt beinhaltet: eine Datenregion zum Speichern der Datenteile in Übereinstimmung mit ihren jeweiligen Adressen;
eine Referenzregion zum Speichern der Kopfadresse von allen vokalen Tongruppendaten und der Zahl bzw. Anzahl von Datenteilen; und
das Steuergerät Daten durch Bestimmen bzw. Angeben der Kopfadresse und der Zahl von Datenteilen auswählt bzw. bestimmt.

5. Spielmaschine nach Anspruch 2, wobei der Transfer eines Datenteils durch ein temporäres Unterbrechen der Erstellung einer neuen Szene ausgeführt wird.

6. Spielmaschine nach Anspruch 5, wobei das Steuergerät einen Timer beinhaltet, welcher betreibbar ist, um eine Unterbrechungszeit bereitzustellen.

## Revendications

1. Machine de jeux comprenant :
un écran (13) sur lequel est affichée une scène de jeux ;
un manipulateur (1) pouvant fonctionner pour générer un signal d'instruction en fonction d'une manoeuvre d'un joueur ;
une partie (4) de mémorisation pouvant fonctionner pour mémoriser des données de chacun d'une pluralité de groupes de sons vocaux, chaque groupe de sons vocaux exprimant un mot en liaison avec le jeu ;
un régisseur (3) pouvant fonctionner pour produire, sur l'écran, une nouvelle scène de jeux en fonction d'un programme de jeux qui y est installé et d'un signal d'instruction généré par le manipulateur, et des données désignées pour un groupe de sons vocaux approprié à la scène nouvellement produite ;
un générateur sonore (5, 6, 7) pouvant fonctionner pour générer des sons vocaux appropriés à la nouvelle scène sur la base des données désignées, dans lequel les données désignées sont divisées en plusieurs éléments de données, le générateur sonore comprenant en outre un convertisseur (6) pouvant fonctionner pour convertir les données désignées en sons vocaux, et un moyen (5) de transfert de données pouvant fonctionner pour transférer, les uns après les autres, les plusieurs éléments de données vers le convertisseur pendant des durées respectives d'intervalles de temps prédéterminés jusqu'à ce que toutes les données désignées aient été transférées vers le convertisseur.

2. Machine de jeux selon la revendication 1, dans laquelle le convertisseur peut fonctionner pour convertir les données désignées en sons vocaux, à une cadence qui maintient la fréquence des données à l'intérieur d'une bande audible ; et
le moyen de transfert de données peut fonctionner pour transférer les données désignées vers le convertisseur à une cadence plus rapide que la cadence de conversion du convertisseur.

3. Machine de jeux selon la revendication 2, dans laquelle chaque élément de données est attribué à une adresse spécifique, et dans laquelle le régisseur désigne des données en utilisant une adresse.

4. Machine de jeux selon la revendication 3, dans laquelle la partie de mémorisation comprend :
une région de données mémorisant les éléments de données en fonction de leurs adresses respectives ;
une région de référence mémorisant l'adresse de tête de chaque donnée de groupe de sons vocaux et le nombre d'éléments de données ; et
dans laquelle le régisseur désigne des données en précisant l'adresse de tête et le nombre d'éléments de données.

5. Machine de jeux selon la revendication 2, dans laquelle on effectue le transfert d'un élément de données en interrompant temporairement la production d'une nouvelle scène.

6. Machine de jeux selon la revendication 5, dans laquelle le régisseur comprend un temporisateur pouvant fonctionner pour fournir un temps d'interruption.
